# EUROPEAN PATENT APPLICATION

(11) **EP 3 981 961 A1**
(43) Date of publication of application: **13.04.2022**
(21) Application number: 20200432.1
(22) Date of filing: 07.10.2020
(51) Int. Cl.: F02B 19/10, F02B 19/12, F02B 19/16, F01N 13/10

(54) **COMBUSTION ENGINE WITH PRE-CHAMBER**

(71) Applicant: Winterthur Gas & Diesel Ltd., 8401 Winterthur (CH)
(72) Inventor: Bellucci, Valter, 5507 Mellingen (CH); Frapolli, Nicolo, 8050 Oerlikon (CH); Mazzetta, Marco, 8400 Winterthur (CH)
(74) Representative: Hepp Wenger Ryffel AG

(57) **Abstract**

The invention relates to an internal combustion engine (100) comprising a pre-chamber (2), a method of operating an internal combustion engine (100) with a pre-chamber (2) and a pre-chamber (2). The combustion engine, preferably a large two stroke internal combustion engine, comprises a cylinder (10) with a cylinder liner (8) and a cylinder head (4), at least one piston (9) reciprocably received in a cylinder volume (5) formed in said cylinder (10). The combustion engine further comprises at least one pre-chamber (2), preferably arranged in the cylinder head (4), with a pre-chamber volume (11) being fluidly connected to the cylinder volume (5) for ignition of a gas/air mixture, and at least one exhaust valve (6) arranged in the cylinder head (4) to control gas flow from said cylinder volume (5) to an exhaust pipe (7) of the combustion engine (100). The pre-chamber (2) comprises an outlet (1) which is fluidly connectable to the exhaust pipe (7).

## Description

The invention relates to an internal combustion engine comprising a pre-chamber, a method of operating an internal combustion engine with a pre-chamber, a pre-chamber and a computer programm.

Large-bore, lean-operating gas engines generally include a pre-chamber assembly in order to ensure ignition processes in the engine. The pre-chamber includes a pre-chamber volume, which is in fluid communication with a main combustion chamber of the cylinder via one or more small orifices.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a gas engine, a dual fuel or a multi fuel engine. Engine speed is preferably below 800 RPM (4-stroke) and more preferably below 200 RPM (2-stroke) which indicates the designation of low speed engines.

Pre-chambers are utilised especially in so-called lean-burn-engines where a powerful ignition source is needed. In this case, a pre-chamber is used to provide a high energy for igniting the lean gas mixture in a main combustion chamber. In the pre-chamber the lean basic air-gas mixture coming from the main combustion chamber can be ignited either by the injection of a proper fuel, reactive in the excess of air and self-igniting beyond certain pressure and temperature conditions, or by means of a glow plug or a spark plug, combined with a local stoichiometric air-gas mixture that might be obtained adding the proper amount of gas directly in the pre-chamber.

The shape of the pre-chamber is dependent on the actual method of ignition. Pilot fuel ignition with or without glow plug can provide higher ignition energy than a conventional spark pre-chamber ignition system.

The requirements are generally fast and repeatable mixing of the basic air-gas fuel mixture introduced into the pre-chamber and eventually of the pilot fuel to be injected.

The pre-chamber has to be ready for each new cycle. Residuals remained in the pre-chamber from a previous cycle may cause a rising temperature and may promote undue self-ignition.

Although a number of pre-chamber arrangements are known, they are not able to meet the requirements described above at the same time.

It is therefore an object of the present invention to avoid the drawbacks of the prior art and to provide a combustion engine, a method for using a combustion engine and a pre-chamber, wherein the pre-chamber can optimally work with respect to the combustion cycle.

The object is accomplished by a combustion engine, a method of operating a combustion machine, a pre-chamber according to the independent claims and a computer program according to the independent claims.

The combustion engine preferably is a large two stroke internal combustion engine.

The combustion engine comprises at least one cylinder having a cylinder liner and a cylinder head. At least one piston is reciprocably received in a cylinder volume formed in said cylinder.

Typically the piston is connected to a crankshaft. The piston is arranged to reciprocate between a top dead center (TDC) and a bottom dead center (BDC) during operation of the engine.

At least one exhaust valve is arranged in the cylinder head to control gas flow from said cylinder volume to an exhaust pipe of the combustion engine.

The combustion engine comprises at least one pre-chamber for ignition of a gas/air mixture.

The ratio of the volume of the pre-chamber and the compression volume of the combustion cylinder may be between 0.1-1%, preferably 0.1-0.8%, most preferably 0.1-0.5%.

At least one pre-chamber with a pre-chamber volume is fluidly connected to the cylinder volume. The pre-chamber may be arranged in the cylinder head.

The pre-chamber comprises at least one outlet which is fluidly connectable to the exhaust pipe and the pre-chamber comprises at least one outlet valve to control exhaust flow from the pre-chamber to the exhaust pipe. In case the pre-chamber comprises more than one outlet, each outlet is controllable by a valve. The outlet valve may be slidably received in said pre-chamber and may cooperate with an outlet valve seat disposed in a wall of the pre-chamber.

The outlet of the pre-chamber, in particular the seat of the outlet valve, may be arranged in a distance from the orifice or the duct for allowing the fluid connection to the cylinder volume. The outlet may be arranged opposite to the orifice or the duct.

The combustion engine may comprise at least one feeder pipe which is fluidly connected to the exhaust pipe and fluidly connectable to the outlet of the pre-chamber.

The pre-chamber may be fluidly connectable to the exhaust pipe by one or more feeder pipes. The feeder pipe allows the pre-chamber to be arranged in a distance from the exhaust valve.

The exhaust valve may be arranged centrally in the cylinder head. The pre-chamber may be arranged in the cylinder head with a distance towards the cylinder liner which is smaller than the distance towards the radial center of the cylinder. Thus, the pre-chamber may be arranged eccentrically with respect to the main axis of the combustion cylinder.

The exhaust valve may alternatively be arranged eccentrically with respect to the main axis of the combustion cylinder. Preferably the combustion engine comprises exactly one pre-chamber with one or more outlets.

The pre-chamber may be arranged around the exhaust pipe. The pre-chamber may be arranged annular with respect to the exhaust valve.

The combustion engine may comprise more than one pre-chamber, preferably all pre-chambers have an outlet and an outlet valve. The cylinder preferably comprises an air inlet arranged in the cylinder liner. In particular the cylinder comprises scavenging ports arranged in the cylinder liner. The internal combustion engine can be a longitudinally flushed two-stroke engine.

The pre-chamber may comprise ignition means for ignition of a gas-air mixture, preferably an ignition plug, which extends into an ignition chamber of the pre-chamber.

The pre-chamber may comprise injection means, in particular a fuel nozzle, for injection of a proper pilot fuel. By injection of the pilot fuel ignition in the cylinder may be achieved at a defined point of the combustion cycle. The pilot fuel may be a gas or diesel. The pilot fuel preferably is a liquid fuel.

The combustion engine may comprise a first set unit for setting the outlet valve. The first set unit provides for actuating the outlet valve. The outlet valve may be actuated by compressed air, hydraulically or electrically. The first set unit may also be adapted for setting a plurality of outlet valves, for example a plurality of outlet valves of one pre-chamber and/or a plurality of outlet valves of different pre-chambers.

Preferably, the combustion engine comprises a second set unit for setting the at least one exhaust valve. The second set unit provides for actuating the exhaust valve. The exhaust valve may be actuated by compressed air, hydraulically or electrically. If on cylinder comprises more than one exhaust valves, there may be on second set unit for all exhaust valves or a plurality of second set units, for example one second set unit for each of the exhaust valves.

Thus, the outlet valve and the exhaust valve may be actuated independently from each other.

Alternatively the actuating of the exhaust valve and the outlet valve may be coupled, such that movement of one valve may cause movement of the other valve.

The set units may comprise switches and/or valves.

In an advantageous embodiment of the combustion engine, the combustion engine comprises a control unit for operating said outlet valve and said exhaust valve in a proper timed sequence with the displacement of said piston.

The control unit comprises at least one output line, preferably being connected or connectable to a first set unit for setting said outlet valve and/or to a second set unit for setting said exhaust valve.

Preferably, the control unit comprises at least a first output line and at least a second output line. The first output line may be connected or connectable to a first set unit for setting said exhaust valve and the second output line may be connected or connectable to a second set unit for setting said exhaust valve.

In particular the control unit is adapted for controlling said outlet valve and preferably said at least one exhaust valve. The control unit may send a corresponding signal to the respective set unit via a respective output line.

The control unit may be adapted to control said outlet valve and said at least one exhaust valve, such that both said valves are closed during compression, combustion and expansion and while the piston passes its top dead center. The control unit may provide for opening the exhaust valve after the piston has passed the top dead center and while the piston moves downwardly.

The control unit may provide for opening the outlet valve to eject any residuals remained inside the pre-chamber, preferably after the exhaust valve is open and/or after air has started entering the cylinder.

The control unit may provide for closing the outlet valve after the piston has passed its bottom dead center and air has stopped entering the cylinder. Preferably, at the same time or later, the control unit may provide for closing the exhaust valve.

Preferably the control unit is also adapted for controlling the air inlet into the cylinder. The combustion engine may comprise a set unit for setting an air inlet valve and the control unit may comprise a further output line, which may be connected or connectable to the set unit for setting the air inlet valve.

The object of the invention is also accomplished by a method of operating an internal combustion engine as described above. The method comprises the following steps.

The at least one exhaust valve and the at least one outlet valve of the pre-chamber are kept closed during compression, combustion and expansion, and while the piston passes its top dead center.

During the time in which the piston moves downwardly, the exhaust valve is opened, such that exhaust gas may escape the cylinder. After the exhaust valve has been opened air may enter the cylinder. The exhaust is flushed out of the cylinder.

The outlet valve is opened to eject any residuals remained inside the pre-chamber, preferably after the exhaust valve has been opened and/or after air has started entering the cylinder. After the piston has passed its bottom dead center air stops entering into the cylinder. The outlet valve is closed and, preferably at the same time or later, the exhaust valve is closed. The object of the invention is also accomplished by a pre-chamber for a combustion engine, as described above. The pre-chamber comprises an outlet which is fluidly connectable to an exhaust pipe of the combustion engine, and the pre-chamber comprises an outlet valve to control exhaust flow from the pre-chamber to the exhaust pipe.

The object of the invention is also accomplished by a computer program for loading into a computer and/or for running on the computer, wherein the computer program is adapted for carrying out a method for operating an internal combustion engine as described above, in particular for operating said outlet valve and said exhaust valve in proper timed sequence with the displacement of said piston.

The computer program may be loaded and/or run on a control unit of a combustion engine as described above.

The computer program may be loaded and/or run on a central computer device of a ship.

In the following, the invention is further explained in embodiments by means of figures:
- Figure 1:: shows a schematic cross-sectional view of a part of a first example of a combustion engine;
- Figures 2a-2d:: schematically show the various positions of the valves during the combustion cycle in cross-sectional views of a part of a combustion engine;
- Figure 3:: shows schematically show the settings of the valves during the combustion cycle;
- Figure 4:: shows a schematic illustration of the combustion engine;
- Figure 5:: shows a schematic cross-sectional view of a part of a second example of a combustion engine;
- Figure 6:: shows a schematic cross-sectional view of a part of a third example of a combustion engine;
- Figure 7:: shows a schematic cross-sectional view of a part of a fourth example of a combustion engine.

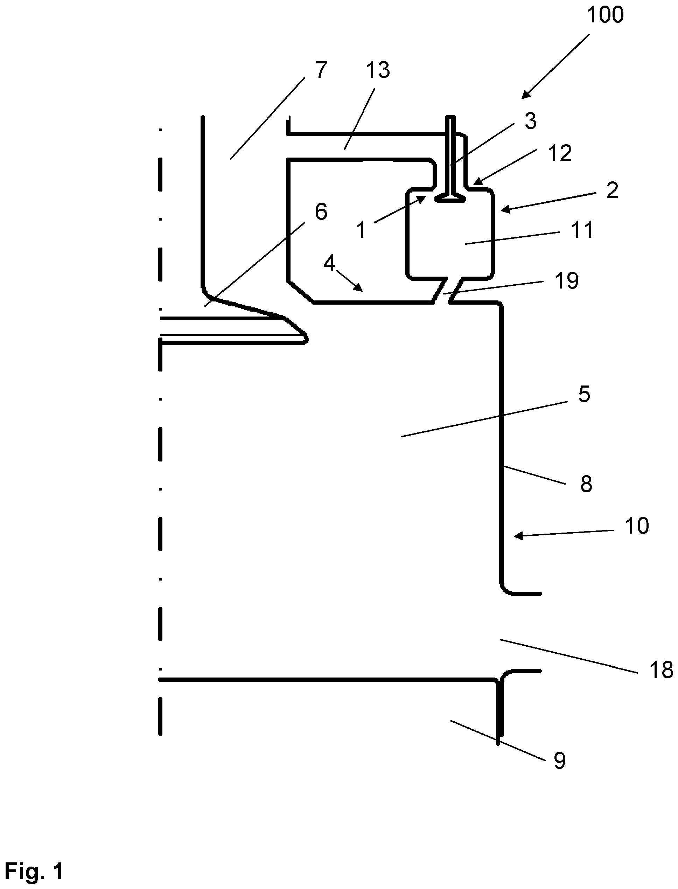

Figure 1 shows a schematic cross-sectional view of a part of a first example of a combustion engine 100.

The combustion engine 100 comprises a cylinder with a cylinder liner 8 and a cylinder head 4. A piston 9 moves up- and downwards within a cylinder volume 5 formed in said cylinder 10. A scavenging port 18 is arranged in the cylinder liner 8. When the piston 9 is in its bottom dead center, as shown in the figure, air may enter the cylinder 10.

A fuel inlet not shown in the figures may also be arranged in the cylinder liner.

An exhaust valve 6 is arranged in the cylinder head 4 to control gas flow from said cylinder volume 5 to an exhaust pipe 7 of the combustion engine 100.

The exhaust pipe 7 may guide exhaust gas to an exhaust gas manifold and/or to a turbine of a turbocharger not shown in the figures.

The combustion engine 100 further comprises a pre-chamber 2 arranged in the cylinder head 4. A pre-chamber duct 19 fluidly connects the volume 11 of the pre-chamber 2 with the cylinder volume 5.

The pre-chamber 2 comprises an outlet 1 which is fluidly connectable to the exhaust pipe 7. An outlet valve 3 is arranged in the outlet 1. The outlet valve 3 is slidably received in the pre-chamber 2 and cooperates with an outlet valve seat 12 disposed in a wall of the pre-chamber 2.

The outlet valve 3 controls the fluid communication between the pre-chamber volume 11 and a feeder pipe 13 which guides any fluid from the pre-chamber volume 11 to the exhaust pipe 7.

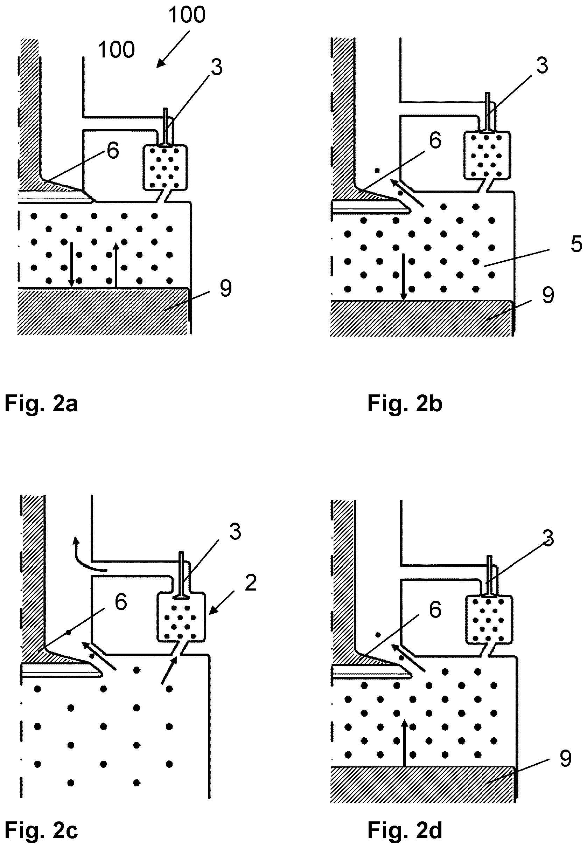

Figures 2a-2d schematically show the various positions of the valves 6, 3 during the combustion cycle in cross-sectional views of a part of a combustion engine 100.

When the piston 9 passes its top dead center as shown in Figure 2a the exhaust valve 6 and the outlet valve 3 are closed.

When the piston 9 moves further downwardly, as shown in figure 2b, the exhaust valve 6 opens and residuals start exiting the cylinder volume 5. The scavenging ports not shown in this figure are open and fresh air starts entering the cylinder volume 5.

Thereafter, also the outlet valve 3 opens, as shown in figure 2c. Exhaust gas leaves through both valves 3, 6.

The opening of the outlet valve 3 allows scavenging air to purge residuals of the combustion out of the pre-chamber 2.

After the piston 9 has passed its bottom dead center, the scavenging port not shown in the figure is closed.

The outlet valve 3 is closed thereafter, as shown in figure 2d. At the same time or later also the exhaust valve 6 will be closed and the combustion engine 100 again is the state as shown in figure 2a.

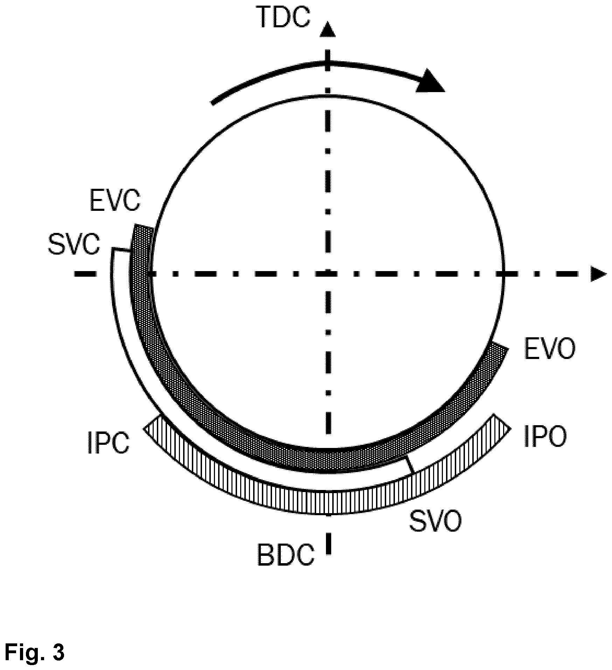

Figure 3 shows schematically the settings of the valves 3, 6 (see for example figure 1) and the scavenging port (see for example figure 1) during the combustion cycle.

At a crank angle of 0° the piston 6 (see for example figure 1) is in the top dead center TDC. Bothe valves 3, 6 are closed, which corresponds to the state of the combustion engine 100 as shown in figure 2a.

The piston moves downwardly and the volume above the piston increases. During expansion, the pressure decreases.

At a certain point EVO, when the crank angle has grown and the piston 9 has moved downwardly respectively, the exhaust valve 6 opens which corresponds to the state of the combustion engine 100 as shown in figure 2b.

At a certain point IPO, when the crank angle is greater than the crank angle at EVO, also the scavenging port is opened.

The scavenging port may alternatively be opened before the exhaust valve is opened. However, there is the risk that there is a massive blow back on the piston underside.

After the scavenging port has opened at a point IPO, at a point SVO the outlet valve 3 opens, prior or preferably after a crank angle of 180°, which corresponds to the state of the combustion engine 100 as shown in figure 2c.

After the piston has passed the bottom dead center BDC and the crank angle is greater 180°, at a point IPC the scavenging port is closed.

The scavenging port is closed by the moving piston and/or by a respective valve.

When the crank angle is greater 180°, in particular greater 270°, at a point SVC the outlet valve 3 is closed. At the same time or later, at a point EVC, also the exhaust valve 6 is closed. Preferably, the outlet valve 3 is closed after the scavenging port has been closed and before or at the same time, when the exhaust valve 6 is closed. This corresponds to the state of the combustion engine 100 as shown in figure 2d.
Alternatively, the outlet valve may be closed after the exhaust valve has been closed.

When the piston approaches the top dead center TDC, thus between the point EVC and EVO the state of the combustion engine corresponds to figure 2a.

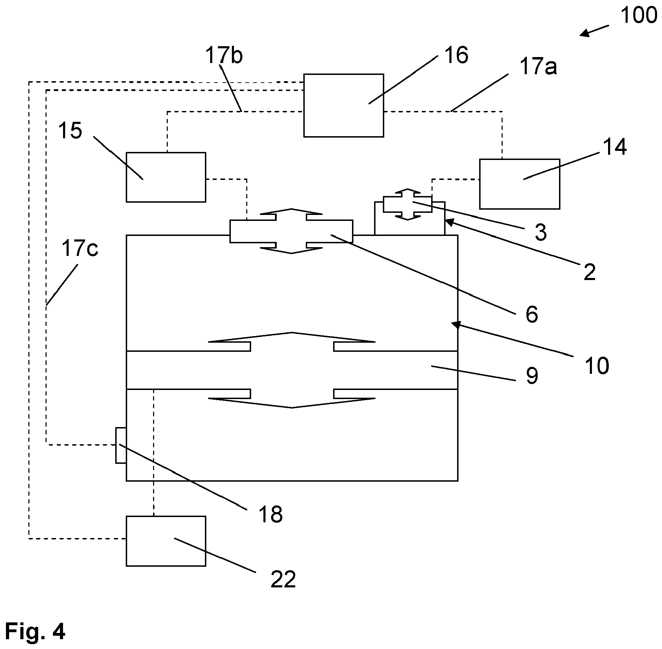

Figure 4 shows a schematic illustration of the combustion engine 100.

The combustion engine 100 comprises a first set unit 14 for setting the outlet valve 3 and a second set unit 15 for setting the exhaust valve 6.

The combustion engine 100 comprises a control unit 16 for operating the outlet valve 3 and the exhaust valve 6 in proper timed sequence with the displacement of the piston 9.

The control unit 16 comprises a first output line 17a connected to the first set unit 14 for setting the outlet valve 3,
The control unit 16 comprises a second output line 17b, connected to the second set unit 15 for setting said exhaust valve 6.

The control unit 16 comprises a third output line 17c for setting the scavenging port 18.

The combustion engine 100 comprises a crank angle sensor 22 which is also connected to the control unit 16.

The control unit 16 is adapted for controlling the outlet valve 3 and the exhaust valve 6 depending on the crank angle.

A computer program may be loaded and run on the control unit 16 operating a combustion cycle shown in figure 3.

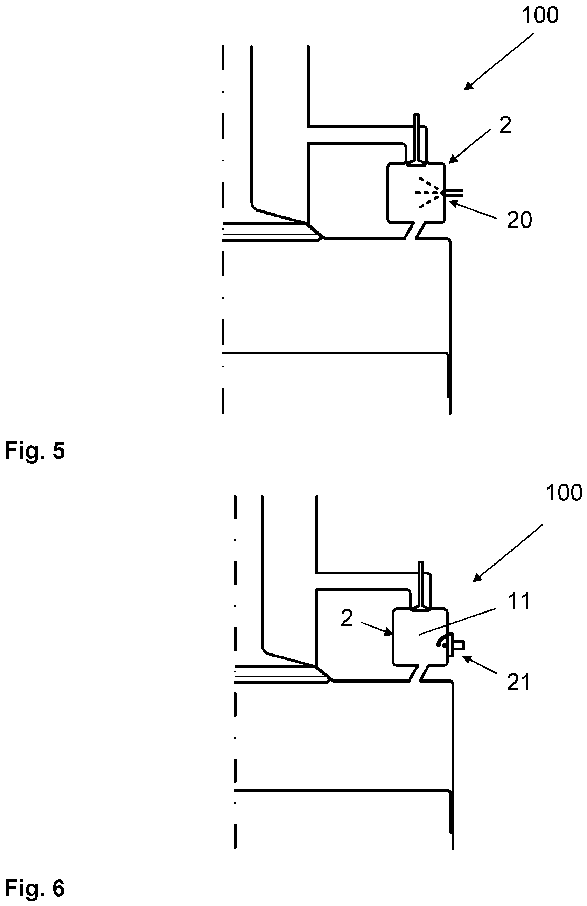

Figure 5 shows a schematic cross-sectional view of a part of a second example of a combustion engine 100. In this example the pre-chamber 2 comprises a fuel nozzle 20 for injecting a pilot fuel.

Figure 6 shows a schematic cross-sectional view of a part of a third example of a combustion engine 100. In this example the pre-chamber 2 comprises an ignition plug 21, which extends into an volume 11 of the pre-chamber.

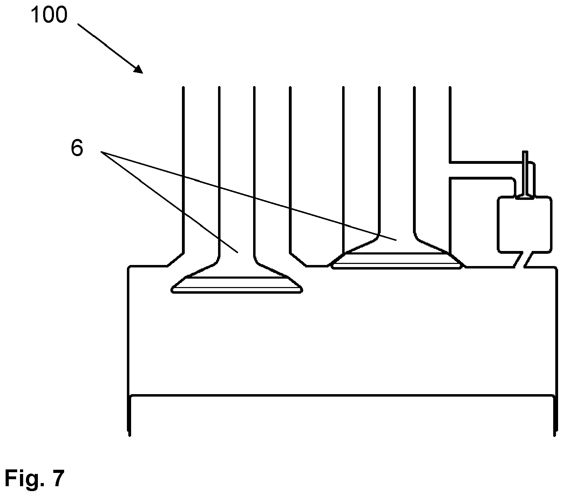

Figure 7 shows a schematic cross-sectional view of a part of a fourth example of a combustion engine 100, comprising two exhaust valves 6.

## Claims

1. Combustion engine, preferably a large two stroke internal combustion engine, comprising:
- a cylinder (10) with a cylinder liner (8) and a cylinder head (4),
- at least one piston (9) reciprocably received in a cylinder volume (5) formed in said cylinder (10),
- at least one pre-chamber (2), preferably arranged in the cylinder head (4), with a pre-chamber volume (11) being fluidly connected to the cylinder volume (5) for ignition of a gas/air mixture, and
- at least one exhaust valve (6) arranged in the cylinder head (4) to control gas flow from said cylinder volume (5) to an exhaust pipe (7) of the combustion engine (100),
**characterized in that**
the pre-chamber (2) comprises an outlet (1) which is fluidly connectable to the exhaust pipe (7) and the pre-chamber (2) comprises an outlet valve (3) to control exhaust flow from the pre-chamber (2) to the exhaust pipe (7).

2. Combustion engine according to claim 1, wherein the outlet valve (3) is slidably received in said pre-chamber (2) and cooperates with an outlet valve seat (12) disposed in a wall of the pre-chamber (2).

3. Combustion engine according to claim 1 or 2, wherein
the combustion engine (100) comprises a feeder pipe (13) fluidly connected to the exhaust pipe (7) and fluidly connectable to the outlet (1) of the pre-chamber (2).

4. Combustion engine according to one of the preceding claims, wherein the cylinder (10) comprises an air inlet (18), in particular scavenging ports, arranged in the cylinder liner (8) .

5. Combustion engine according to one of the preceding claims, wherein
the pre-chamber (2) comprises ignition means (21) for ignition of a gas-air mixture, preferably an ignition plug, which extends into an volume (11) of the pre-chamber (2)
and/or
the pre-chamber (2) comprises injection means (20), in particular a fuel nozzle, for injection of a proper fuel.

6. Combustion engine according to one of the preceding claims, wherein the combustion engine (100) comprises a first set unit (14) for setting the outlet valve (3) and preferably a second set unit (15) for setting the at least exhaust valve (6) .

7. Combustion engine according to one of the preceding claims, wherein the combustion engine comprises a control unit (16) for operating said outlet valve (3) and said exhaust valve (6) in proper timed sequence with the displacement of said piston (9),
the control unit (16) comprising at least one output line (17a, 17b), preferably being connected or connectable to a first set unit (14) for setting said outlet valve (3) and/or a second set unit (15) for setting said exhaust valve (6), the control unit (16) in particular being adapted for controlling said outlet valve (3) and preferably said at least one exhaust valve (6).

8. Combustion engine according to claim 7,
wherein the control unit (16) is adapted to control said outlet valve (3) and said at least one exhaust valve (6), such that
- both said valves (3, 6) are closed during compression, combustion and expansion, and while the piston (9) passes its top dead center,
- while the piston (9) moves downwardly, the exhaust valve (6) is opened,
- the outlet valve (3) is opened to eject any residuals remained inside the pre-chamber (2), preferably after the exhaust valve is open and/or after air has started entering the cylinder (10);
- after the piston (9) has passed its bottom dead center and air has stopped entering the cylinder (10), the outlet valve (5) is closed and, preferably at the same time or later, the exhaust valve (6) is closed.

9. A method of operating an internal combustion engine according to one of the preceding claims, the method comprising the steps of:
- Keeping closed the at least an exhaust valve (6) and an outlet valve of the pre-chamber during compression, combustion and expansion, and while the piston (9) passes its top dead center,
- while the piston (9) moves downwardly, the the exhaust valve (6) is opened,
- letting air enter the cylinder (10),
- opening the outlet valve (3) to eject any residuals remained inside the pre-chamber (2), preferably after the exhaust valve is open and/or after air has started entering the cylinder (10);
- after the piston (9) having passed its bottom dead center and air stops entering into the cylinder (10),
- closing the outlet valve (5) and, preferably at the same time or later, closing the exhaust valve (6)

10. Pre-chamber for a combustion engine (100), according to one of claims 1-8, **characterised in that** the pre-chamber (2) comprises an outlet (1) which is fluidly connectable to an exhaust pipe (7) of the combustion engine (100), and the pre-chamber (2) comprises an outlet valve (3) to control exhaust flow from the pre-chamber (2) to the exhaust pipe (7).

11. Computer program for loading into a computer and/or for running on the computer, wherein the computer program is adapted for carrying out a method according to claim 9 for operating an internal combustion engine according to one of claims 1-8.
